Europäisches Patentamt

European Patent Office

Office européen des brevets

(11) Veröffentlichungsnummer: **0 349 518**
**A2**

## EUROPÄISCHE PATENTANMELDUNG

(21) Anmeldenummer: **89890004.8**

(22) Anmeldetag: **04.01.89**

(51) Int. Cl.⁵: **F 01 D 1/34**
F 02 C 3/14, F 23 R 3/44

(30) Priorität: **05.05.88 AT 1181/88**

(43) Veröffentlichungstag der Anmeldung:
**03.01.90 Patentblatt 90/01**

(84) Benannte Vertragsstaaten:
**AT BE CH DE ES FR GB GR IT LI LU NL SE**

(71) Anmelder: **Lukatsch, Johann**
**Schnepfenweg 1**
**A-9065 Ebental (Kärnten) (AT)**

(72) Erfinder: **Lukatsch, Johann**
**Schnepfenweg 1**
**A-9065 Ebental (Kärnten) (AT)**

(74) Vertreter: **Beer, Manfred, Dipl.-Ing. et al**
**Lindengasse 8**
**A-1070 Wien (AT)**

The title of the invention has been amended (Guidelines for Examination in the EPO, A-III, 7.3).

(54) **Impulsturbine mit Flammenrohrbrennkammer.**

(57) Der Antrieb einer Maschine (1) mit am Umfang eines Scheibenrades (2) angeordneten Schaufeln (3) mit Vertiefungen erfolgt durch die von wenigstens einem Brenner (4), der etwa tangential zur Umfangsrichtung des Scheibenrades (2) am Gehäuse (5) angeordnet ist, erzeugte Strömungsenergie der Verbrennungsgase. Der Brenner (4) mündet in eine im Gehäuse (5) angeordnete, von einem Flammrohr (15) begrenzte Brennkammer (13).

Fig.1

EP 0 349 518 A2

**Beschreibung**

## Maschine mit wechselhafter Hochdruckbeständigkeit

Die Erfindung betrifft eine Maschine mit am Umfang eines Scheibenrades angeordneten Schaufeln mit Vertiefungen, wobei der Antrieb des Scheibenrades durch die von wenigstens einem Brenner, der etwa tangential zur Umfangsrichtung des Scheibenrades am Gehäuse angeordnet ist, erzeugte Strömungsenergie der Verbrennungsgase erfolgt.

Es sind Wasser- und Dampfturbine bekannt, die jedoch an sehr große Anlagen gekoppelt sind und mit sehr hohen Leistungen betrieben werden, und daher an einen festen Standort gebunden sind.

Aus der FR-PS 2 519 700 ist eine Turbine bekannt, bei der das Verbrennungsgas etwa tangential durch im Gehäuse angeordnete Düsen zugeführt wird. Die Zündung des Verbrennungsgases erfolgt durch einen Brenner oder Zünder in am sägezahnartigen Turbinenrad vorgesehenen Explosionskammern.

Durch diese Ausbildung erhalten die Verbrennungsgase keine gezielte Sströmungsrichtung gegen die Schaufeln des Turbinenrades. Die Verbrennung des Brennstoffes in der Turbine nach der FR-PS 2 519 700 wird weiters immer wieder durch die sich an der Düse und dem Brenner oder Zünder vorbeibewegenden Schaufeln gestört bzw. unterbrochen, wodurch sich insgesamt eine schlechte Verbrennung und dadurch ein geringer Wirkungsgrad ergeben.

Aus der GB-PS 403 584 ist die Anordnung von Düsen in etwa tangentialer Richtung bekannt. Die Verwendung eines Brenners ist aus dieser Patentschrift nicht bekannt.

In der US-PS 800 684 und der FR-PS 1 164 866 ist eine Rotationskolbenmaschine beschrieben, bei der im Rotations kolben etwa tangential angeordnete Kammern vorgesehen sind, in die der Brennstoff in einem ersten Arbeitsgang eingebracht wird und in einem zweiten gezündet und explosionsartig verbrannt wird.

Bei der in der DE-PS 393 849 beschriebenen Verpuffungsturbine erfolgt die Verpuffung des Brennstoffes in außerhalb des Gehäuses angeordneten Kammern.

Der Erfindung liegt die Aufgabe zugrunde, eine Maschine der eingangs genannten Art zu schaffen, die sich durch eine einfache Bauweise, hohen Wirkungsgrad und ortsunabhängige Betriebsmöglichkeiten auszeichnet.

Erfindungsgemäß wird dies dadurch gelöst, daß der Brenner in eine im Gehäuse angeordnete, von einem Flammrohr begrenzte Brennkammer mündet.

Eine besonders einfache Schaufelform ergibt sich dadurch, daß die Vertiefungen der Schaufeln etwa die Form eines Trichters besitzen, oder daß die Vertiefungen der Schaufeln die an sich bekannte Doppelbecherform besitzen.

Um den Brennraum und das Flammrohr der Maschine gut abzudichten, werden das Scheibenrad und die Schaufeln von einer Gehäusewand umschlossen.

Eine einfache und billige Betriebsform der Maschine ergibt sich, wenn der Brenner mit Druckluft und Brennstoff, vorzugsweise Wasserstoff, Gas oder Öl, betrieben wird und zur Erzeugung der Druckluft für den Brenner ein Abgasturbolader vorgesehen ist. Es ist jedoch auch möglich, daß zur Erzeugung der Druckluft für den Brenner ein von einer externen Kraftquelle angetriebener Kompressor vorgesehen ist. Letztere Möglichkeit bietet den Vorteil, unabhängig von der Betriebsweise der Maschine immer konstanten Druck der Druckluft zu haben, was besonders beim Anfahren der Maschine von Vorteil ist.

Um eine besonders zuverlässige und vollständige Verbrennung zu erzielen, kann ein Verdampfer vorgesehen sein, in dem der flüssige Brennstoff vorverdampft wird, was vorzugsweise dadurch geschieht, daß die abströmenden Verbrennungsgase zur Beheizung des Verdampfers verwendet werden. Der flüssige Brennstoff kann jedoch auch mit hohem Druck in die Brennkammer eingespritzt und dort zerstäubt oder bereits vor dem Einspritzen in die Brennkammer mit Druckluft zerstäubt werden.

Zur Zündung der verbrennung kann in der Brennkammer im Bereich vor der Düsenöffnung des Brenners eine Zündeinrichtung angeordnet sein.

Zur Kühlung kann um das Flammrohr im Bereich der Brennkammer und der Düsenöffnung ein von Kühlluft durchströmter Kühlkanal und Verbindungskanäle zum Einspeisen der Kühlluft in die Druckluftleitung vorgesehen sein.

Die Verbrennungsgase können durch einen in Umfangsrichtung etwa tangential eingesetzten Abströmkanal abgeleitet werden . Die abströmenden heißen und unter Druck stehenden Verbrennungsgase können noch weiter dadurch genutzt werden, daß zur Erzeugung der Druckluft für den Brenner ein Abgasturbolader vorgesehen ist und/oder, daß ein von den abströmenden Verbrennungsgasen beheizter Verdampfer vorgesehen ist. Die unter Druck stehenden abströmenden Verbrennungsgase können auch noch in eine mit der Maschine gekoppelte Turbine eingeleitet werden, um die Restenergie der Verbrennungsgase zu nutzen.

Eine sehr ökonomische und an den Leistungsbedarf der erfindungsgemäßen Maschine angepaßte Betriebsform ergibt sich dadurch, daß zur Steuerung der Drehzahl des von einer externen Kraftquelle angetriebenen Kompressors für die Druckluft ein Regler vorgesehen ist, der durch den Druck in der Brennkammer gesteuert wird und/oder, daß zur Steuerung der Drehzahl des von einer externen Kraftquelle angetriebenen Kompressors oder Pumpe für den Brennstoff ein Regler vorgesehen ist, der durch den Druck in der Brennkammer gesteuert wird.

Eine Verbesserung des Wirkungsgrades kann noch dadurch erreicht werden, daß die Brennkammer mit Keramik ausgekleidet ist.

Weitere Einzelheiten und Merkmale der Erfindung ergeben sich aus der nachfolgenden Beschreibung eines in den Zeichnungen dargestellten Ausführungsbeispieles. Es zeigt

Fig. 1 einen Teilschnitt durch eine erfindungsgemäße Maschine und

Fig. 2 einen Schnitt durch die Maschine entlang der Linie II-II in Fig. 1.

Ein Scheibenrad 2 einer Maschine 1 mit Schaufeln 3 mit trichterförmigen Vertiefungen wird von Verbrennungsgasen, die von einer Brennkammer 13 durch ein Flammrohr 15 gegen die Schaufeln 3 strömen, angetrieben. Die Verbrennung des Brennstoffes mit Druckluft erfolgt in der Brennkammer 13 vor einer Düsenöffnung 11 eines Brenners 4. Die Zufuhr des flüssigen Brennstoffes zur Düsenöffnung 11 erfolgt über einen von der Abwärme der Brennkammer beheizten Vorverdampfer 12 und eine Brennstoffleitung 10, die in die Düsenöffnung 11 mündet. Die Zufuhr der Druckluft erfolgt durch eine Druckluftleitung 9, die im Bereich vor der Düsenöffnung 11 die Brennstoffleitung umschließt. In der Brennkammer 13 im Bereich vor der Düsenöffnung 11 des Brenners 4 ist eine Zündeinrichtung 14 angeordnet.

Ein Flammrohr 15 wird im Bereich der Brennkammer 13 und der Düsenöffnung 11 in einem Kühlkanal 16 von Kühlluft durchströmt, die dann in die Druckluftleitung 9 im Bereich vor der Düsenöffnung durch Verbindungskanäle 20 eingespeist wird.

Das Scheibenrad 2 mit den Schaufeln 3 ist von einer inneren Gehäusewand 6 umgeben. Zwischen dieser und einer äußeren Gehäusewand 7 entsteht ein Hohlraum 8, der von einer Kühlflüssigkeit, vorzugsweise Wasser unter Druck, durchströmt und die Maschine dadurch gekühlt wird.

Abgeleitet werden die Verbrennungsgase durch einen Abströmkanal 17, der vorzugsweise so eingesetzt ist, daß die Mittelachse 18 des Abströmkanals 17 etwa tangential an die Umfangsmittellinie 19 der Schaufeln 3 anschließt, um ein möglichst ungehindertes Abströmen der Verbrennungsgase zu gewährleisten.

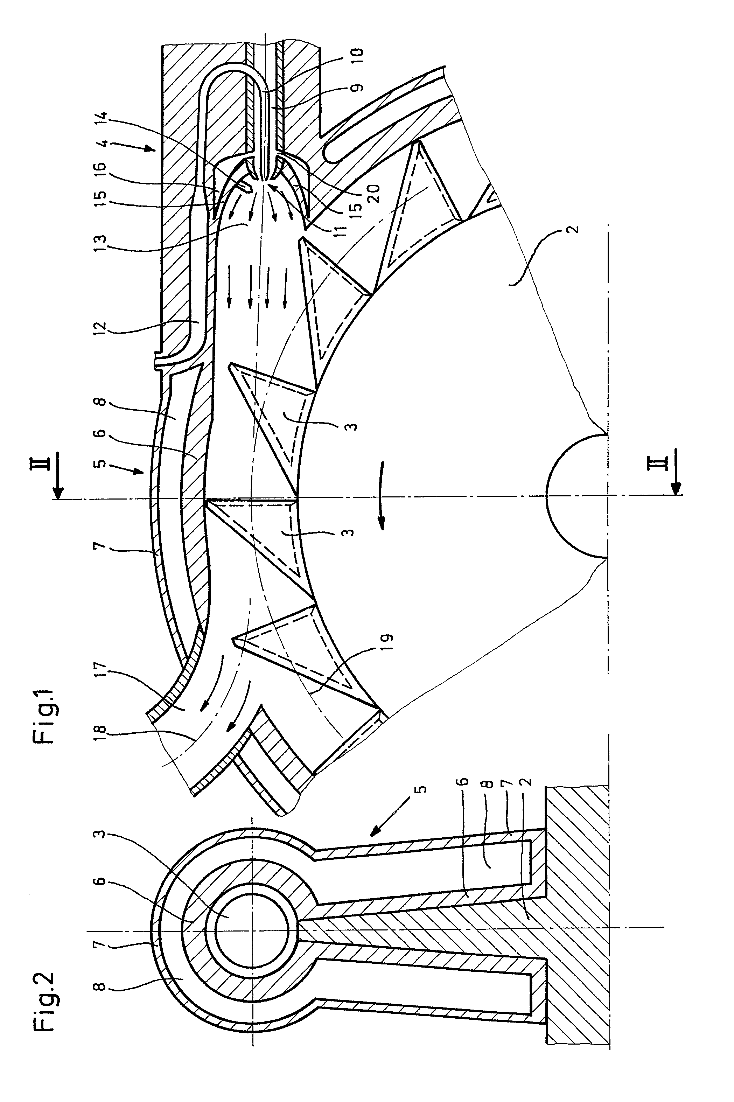

Die in Fig. 1 und 2 dargestellte Form der Maschine 1, der Schaufeln 3, des Scheibenrades 2, sowie der Gehäusewände 6 und 7 und des dadurch gebildeten Hohlraumes 8 zur Kühlung, sowie die Anordnung und Form des Brenners 4, des Brennraumes 13 und des Flammrohres 15 soll keineswegs beschränkend wirken, sondern ist nur eine mögliche Ausführungsform der erfindungsgemäßen Maschine.

**Patentansprüche**

1. Maschine (1) mit am Umfang eines Scheibenrades (2) angeordneten Schaufeln (3) mit Vertiefungen, wobei der Antrieb des Scheibenrades (2) durch die von wenigstens einem Brenner (4), der etwa tangential zur Umfangsrichtung des Scheibenrades (2) am Gehäuse (5) angeordnet ist, erzeugte Strömungsenergie der Verbrennungsgase erfolgt, dadurch gekennzeichnet, daß der Brenner (4) in eine im Gehäuse (5) angeordnete, von einem Flammrohr (15) begrenzte, Brennkammer (13) mündet.

2. Maschine nach Anspruch 1, dadurch gekennzeichnet, daß das Scheibenrad (2) und die Schaufeln (3) von einer Gehäusewand (6) umschlossen sind.

3. Maschine nach einem der Ansprüche 1 oder 2, dadurch gekennzeichnet, daß der Brenner (4) mit Druckluft und Brennstoff, vorzugsweise Wasserstoff, Gas oder Öl, betrieben wird.

4. Maschine nach Anspruch 3, dadurch gekennzeichnet, daß zur Erzeugung der Druckluft für den Brenner (4) ein Abgasturbolader vorgesehen ist.

5. Maschine nach Anspruch 3, dadurch gekennzeichnet, daß zur Erzeugung der Druckluft für den Brenner (4) ein von einer externen Kraftquelle angetriebener Kompressor vorgesehen ist.

6. Maschine nach einem der Ansprüche 1 bis 5, dadurch gekennzeichnet, daß der Brenner (4) getrennte Zuführleitungen für Druckluft und Brennstoff besitzt, wobei die Druckluftleitung (9) und die Brennstoffleitung (10) im Bereich der Düsenöffnung (11) des Brenners (4) münden.

7. Maschine nach Anspruch 1 bis 6, dadurch gekennzeichnet, daß ein zum Vorverdampfen des flüssigen Brennstoffes von der Abwärme der Brennkammer (13) beheizter Verdampfer (12) vorgesehen ist.

8. Maschine nach einem der Ansprüche 1 bis 6, dadurch gekennzeichnet, daß der flüssige Brennstoff mit hohem, vorzugsweise durch einen Schraubenkompressor erzeugten Druck in die Brennkammer eingespritzt und zerstäubt wird.

9. Maschine nach einem der Ansprüche 1 bis 6, dadurch gekennzeichnet, daß der flüssige Brennstoff mit Druckluft vor dem Einspritzen in den Brennraum zerstäubt wird.

10. Maschine nach einem der Ansprüche 1 bis 9, dadurch gekennzeichnet, daß in der Brennkammer (13) im Bereich vor der Düsenöffnung (11) des Brenners (4) eine Zündeinrichtung (14) angeordnet ist.

11. Maschine nach einem der Ansprüche 1 bis 10, dadurch gekennzeichnet, daß um das Flammrohr (15) im Bereich der Brennkammer (13) und der Düsenöffnung (11) ein von Kühlluft durchströmter Kühlkanal (16) vorgesehen ist.

12. Maschine nach Anspruch 11, dadurch gekennzeichnet, daß Verbindungskanäle (20) zum Einspeisen der Kühlluft in die Druckluftleitung (9) vorgesehen sind.

13. Maschine nach einem der Ansprüche 1 bis 12, dadurch gekennzeichnet, daß der Druckluft reiner Sauerstoff beigemengt wird.

14. Maschine nach einem der Ansprüche 1 bis 13, dadurch gekennzeichnet, daß die abströmenden Verbrennungsgase zur Beheizung eines Verdampfers verwendet werden, in dem der flüssige Brennstoff vorverdampft wird.

15. Maschine nach einem der Ansprüche 1 bis 14, dadurch gekennzeichnet, daß die Vertiefungen der Schaufeln (3) etwa die Form eines Trichters besitzen.

16. Maschine nach einem der Ansprüche 1 bis 14, dadurch gekennzeichet, daß die Vertiefungen der Schaufeln (3) die an sich bekannte Doppelbecherform besitzen.

17. Maschine nach einem der Ansprüche 1 bis 16, dadurch gekennzeichnet, daß ein von den abströmenden Verbrennungsgasen beheizter Verdampfer vorgesehen ist.

18. Maschine nach Anspruch 5, dadurch gekennzeichnet, daß zur Steuerung der Drehzahl des von einer externen Kraftquelle angetriebenen Kompressors für die Druckluft ein Regler vorgesehen ist, der durch den Druck in der Brennkammer gesteuert wird.

19. Maschine nach einem der Ansprüche 1 bis 18, dadurch gekennzeichnet, daß zur Steuerung der Drehzahl des von einer externen Kraftquelle angetriebenen Kompressors oder Pumpe für den Brennstoff ein Regler vorgesehen ist, der durch den Druck in deer Brennkammer gesteuert wird.

20. Maschine nach einem der Ansprüche 1 bis 19, dadurch gekennzeichnet, daß die Brennkammer mit Keramik ausgekleidet ist.

Fig.1

Fig.2